Europäisches Patentamt

European Patent Office

Office européen des brevets

(11) Numéro de publication : **0 160 590**
**B1**

# (12) FASCICULE DE BREVET EUROPÉEN

(45) Date de publication du fascicule du brevet :
07.09.88

(51) Int. Cl.⁴ : **B 01 D 33/02, E 02 B 9/04**

(21) Numéro de dépôt : **85400560.0**

(22) Date de dépôt : **22.03.85**

(54) **Dispositif de récupération des organismes vivants sur les filtres rotatifs de stations de pompage d'eau.**

(30) Priorité : 27.03.84 FR 8404765

(43) Date de publication de la demande :
06.11.85 Bulletin 85/45

(45) Mention de la délivrance du brevet :
07.09.88 Bulletin 88/36

(84) Etats contractants désignés :
BE CH DE GB IT LI NL SE

(56) Documents cités :
GB-A- 2 000 449
US-A- 4 199 453

(73) Titulaire : **ELECTRICITE DE FRANCE Service National**
**2, rue Louis Murat**
**F-75008 Paris (FR)**

(72) Inventeur : **Travade, François**
**21, rue Rambuteau**
**F-75004 Paris (FR)**
Inventeur : **Caudron, Lionel**
**7, Hameau Saint-Fiacre**
**F-78290 Croissy Sur Seine (FR)**

(74) Mandataire : **Mongrédien, André et al**
**c/o BREVATOME 25, rue de Ponthieu**
**F-75008 Paris (FR)**

## Description

La présente invention se rapporte à un dispositif de filtration rotatif qui permet la récupération des organismes vivants des stations de pompage d'eau.

L'invention se rapporte à un dispositif destiné à être utilisé par exemple à l'entrée des circuits d'eau de réfrigération des centrales thermiques ou encore sur les prises d'eau à usage urbain ou agricole.

Les stations de pompage qui sont situées au bord de la mer, des lacs et des fleuves sont équipées de filtres rotatifs de type tambour qui atteignent parfois 20 mètres de diamètre et leur surface est constituée par un ensemble de panneaux filtrants ayant des mailles dont les ouvertures ont en général des diamètres de l'ordre de quelques fractions à quelques millimètres (3 à 5 mm dans le cas de prises d'eau de centrale en France).

Les eaux aspirées soit de l'extérieur vers l'intérieur des filtres soit dans le sens inverse sont chargées de détritus et de corps flottants tels que des branchages, des papiers, des matières plastiques qui sont arrêtés par des filtres ainsi que tous les autres corps et organismes vivants plus gros que le diamètre des mailles.

La propreté des filtres nécessaire pour conserver la fonction de filtration est assurée par nettoyage permanent ou intermittent, à l'aide de jets d'eau à toute pression disposés sur la partie supérieure émergée des filtres. Pour ce faire, le tambour tourne autour de son axe et les panneaux filtrants émergés défilent devant une rampe de lavage horizontale située à l'intérieur ou à l'extérieur du tambour de filtration suivant que la filtration s'effectue respectivement de l'extérieur vers l'intérieur du tambour ou inversement. Les divers matériaux et les organismes vivants collés sur le tamis filtrant sont entraînés par l'eau et récupérés dans une goulotte horizontale située du côté de la face filtrante.

Le nettoyage des filtres est assuré grâce à l'action de jets d'eau à haute pression de l'ordre de 4 à 6 bars. On constate que dans ces conditions les organismes vivants sont tués ou fortement endommagés par les chocs mécaniques auxquels ils sont soumis sous l'effet des jets d'eau à haute pression et de leur projection à grande vitesse contre les parois de la goulotte de récupération de forme mal adaptée. Ces organismes sont en outre fortement traumatisés par un début d'asphyxie résultant d'une émersion plus ou moins longue.

Pour remédier à cette dégradation regrettable du milieu naturel et essayer de mettre en œuvre des moyens de récupération les moins hostiles possibles aux organismes vivants, on a déjà proposé plusieurs solutions dont certaines sont basées sur le principe de la récupération des organismes grâce à l'utilisation combinée de la gravité et d'un jet d'eau basse pression mais toutes ces solutions sont inutilisables sur certains filtres et notamment sur les filtres type « tambour » dans lesquels la filtration s'effectue de l'extérieur vers l'intérieur car l'on ne peut alors se servir de la gravité pour récupérer les organismes.

Parmi les documents illustratifs de la technique antérieure, on peut citer le brevet FR-2 524 826 de Beaudrey.

Ce brevet porte sur un dispositif de lavage de tamis rotatifs pour prises d'eau d'installations industrielles du genre comportant une rampe de lavage et un organe d'évacuation disposés de part et d'autre d'un tablier filtrant mobile. On revendique l'utilisation d'une rampe à jet unique à haute pression pour décoller en force les déchets solidement attachés au tablier sans soucis de préserver la vie des organismes vivants.

La présente invention a pour but de remédier à ces inconvénients en fournissant un dispositif de filtration rotatif qui permet la récupération des organismes vivants des stations de pompage d'eau, le dispositif comprenant un filtre rotatif constitué de plusieurs panneaux filtrants pour empêcher le passage d'organismes vivants ou de débris lors de l'entrée de l'eau de l'extérieur vers l'intérieur du filtre et étant supporté en rotation autour d'un axe horizontal, une partie du filtre étant émergée au-dessus de l'eau à filtrer, caractérisé en ce qu'il comprend :

— du côté intérieur des filtres, un ensemble de deux rampes à multiples jets de lavage à l'eau à une pression suffisante pour repousser les organismes vivants sans toutefois les blesser, dont les buses sont orientées vers les panneaux filtrants pour que les jets des deux rampes se rencontrent de l'autre côté du filtre et coopèrent pour fermer une seule veine liquide ;

— sur la face externe des panneaux filtrants des déflecteurs montés de place en place radialement ;

— du côté extérieur des filtres, une goulotte en forme de gouttière de réception de l'eau de lavage et de récupération des organismes vivants dont l'ouverture est orientée vers lesdites rampes et la surface concave permet de recevoir tangentiellement l'eau de lavage, le bord de ladite ouverture étant arrondi ou constitué d'un rouleau dans sa partie basse.

Grâce à cet agencement du dispositif et en particulier à l'effet combiné de l'action des déflecteurs, des jets d'eau à faible pression et du profil de la goulotte, les organismes vivants se trouvant décollés des panneaux filtrants et entraînés en douceur à faible vitesse dans la goulotte dans une veine liquide homogène sans subir de chocs pour enfin être restitués à leur milieu naturel dans les meilleures conditions.

D'autres caractéristiques et avantages ressortiront d'ailleurs de la description qui suit d'un mode de réalisation préféré du dispositif conforme à l'invention donné en référence aux dessins annexés dans lesquels :

— la figure 1 représente schématiquement à titre d'exemple une station de pompage de centrale thermique permettant de voir exactement le site du dispositif conforme à l'invention, ;

— la figure 2 est un agrandissement schématique de la station de pompage ;

— la figure 3 est une vue en perspective d'un filtre tambour en position de fonctionnement ;

— la figure 4 représente un dispositif de récupération des poissons et autres organismes vivants ;

— la figure 5 est une coupe axiale schématique des deux rampes faisant apparaître l'inclinaison des buses et des petits déflecteurs du dispositif.

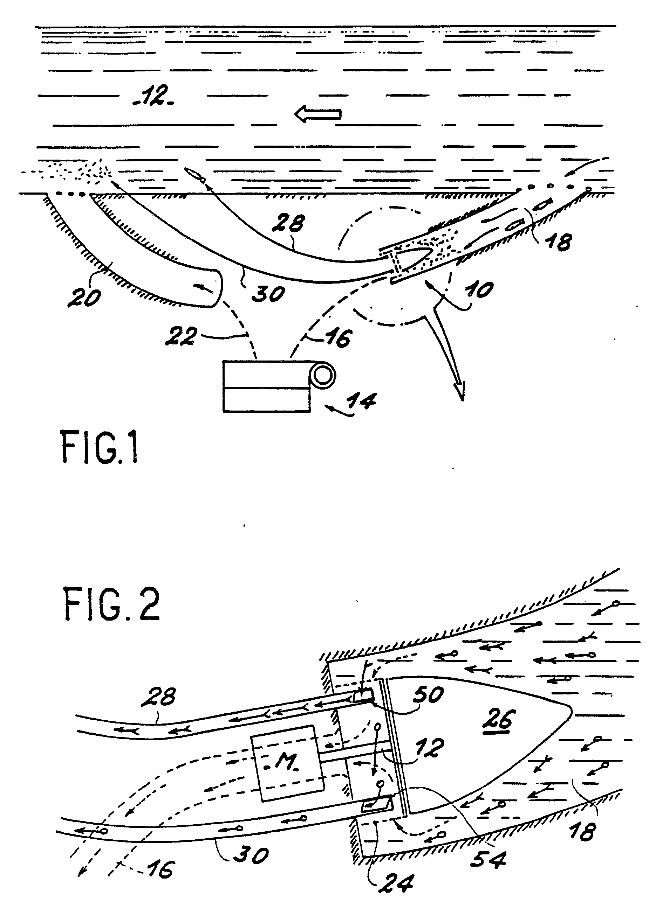

Comme on peut le voir sur la figure 1, la station de pompage 10 est montée ici sur le bord d'un fleuve 12 à proximité d'une centrale thermique 14 qu'elle alimente en eau de refroidissement par un conduit 16 schématisé ici par une flèche.

La station de pompage est montée au fond d'un bras I8 débouchant sur le fleuve 12 alors que l'eau de refroidissement alimentant la centrale thermique est renvoyée par un conduit 22 vers un bras 20 qui débouche également dans le fleuve 12.

Comme on peut le voir sur la figure 2, la station de pompage comprend un filtre tambour 24 entraîné par un moteur M. Un gros déflecteur 26 placé devant le filtre contraint l'eau chargée de petits détritus et d'organismes vivants à se diriger de chaque côté du filtre dans le pertuis formé par le filtre lui-même, les bords du bras 18 et une paroi de la station de pompage elle-même.

Comme on le verra plus en détail ci-après, au sortir du filtre, la majorité des organismes vivants emprunte le conduit 28 alors que les détritus, sont évacués en majorité par le conduit 30, l'ensemble étant entraîné directement dans le fleuve. L'eau filtrée emprunte le canal 16 avant de refroidir la centrale thermique 14.

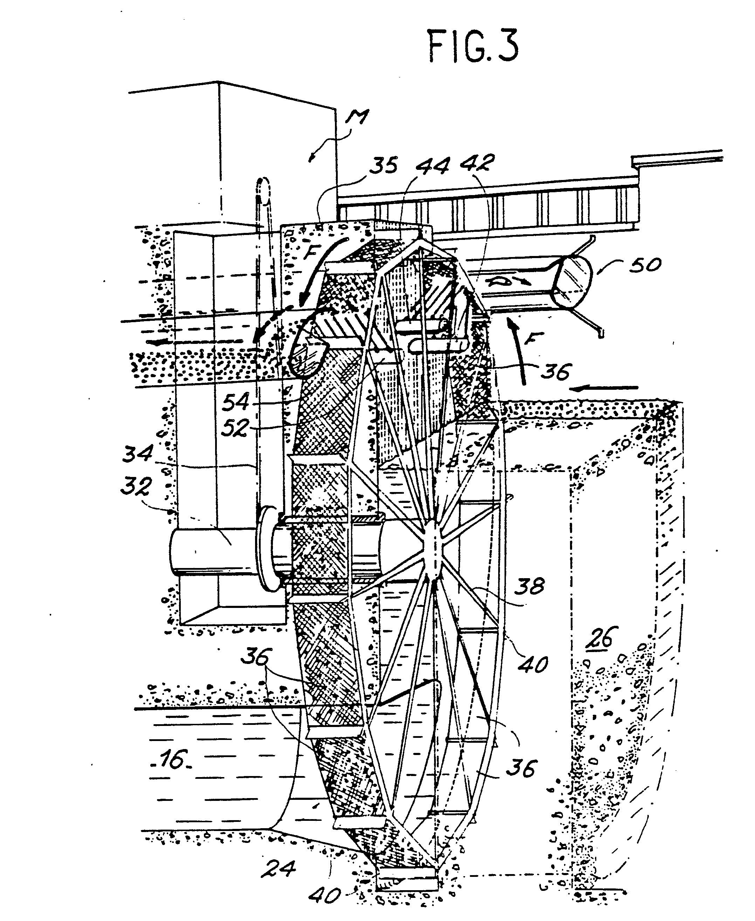

Le filtre représenté sur la figure 3 à la fois en perspective et en partie déchirée se présente sous la forme d'une roue dont l'arbre 32 est placé horizontalement dans un palier ménagé dans une paroi 35 de la station. L'arbre 32 est entraîné par le moteur M au moyen d'une courroie 34 ou par tout autre moyen d'entraînement convenable. Le pourtour extérieur de la roue est constitué d'une succession de panneaux de filtration rectangulaires 36, tous identiques, adjacents deux à deux par leurs côtés homologues.

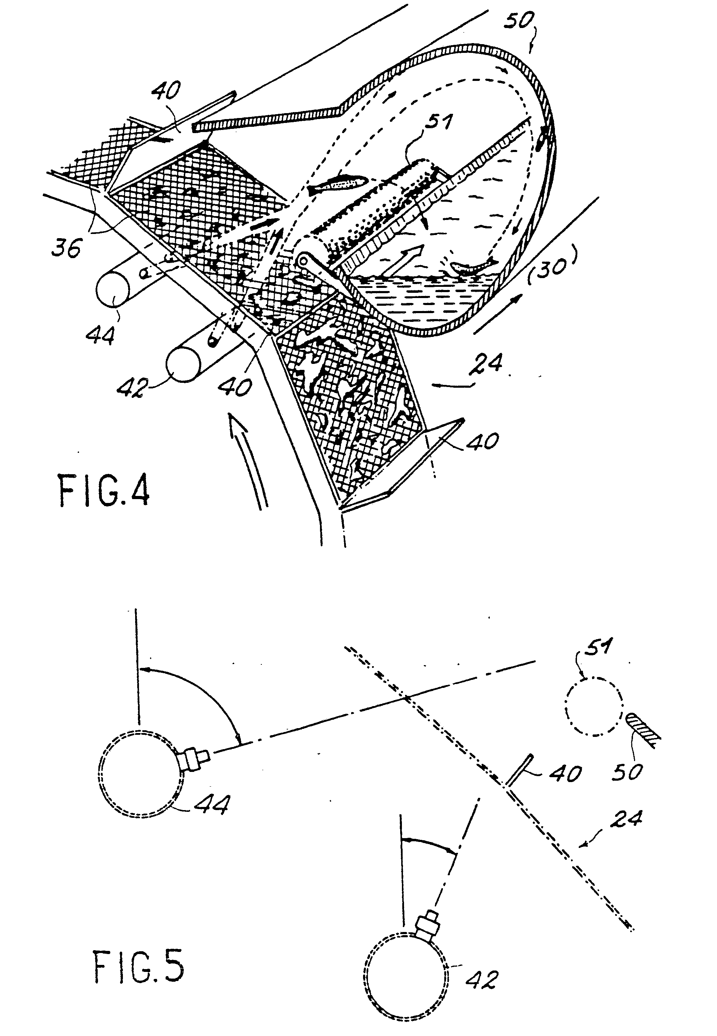

Comme on le voit bien sur la figure 4, les panneaux filtrants 36 sont équipés à leur jonction de petits déflecteurs 40.

Dans la partie émergée de la roue sont montées deux rampes de lavage à savoir une rampe inférieure 42 et une rampe supérieure 44 pour effectuer respectivement le décollage des organismes vivants et leur entraînement dans une goulotte 50. Ces deux rampes sont alimentées en eau à une faible pression de l'ordre de 0,2 à 1 bar. Les buses de sortie de l'eau ont un diamètre d'environ 8 mm et sont inclinées de 30° et de 70° par rapport à la verticale respectivement dans le cas de la rampe inférieure et de la rampe supérieure. A l'extérieur du filtre, en face des deux rampes est montée la goulotte 50 en forme de gouttière dont le bord le plus bas 51 est arrondi voire même constitué d'un rouleau pour favoriser le passage en douceur des organismes vivants et éviter l'accumulation des détritus.

Comme on peut le voir sur la figure 3, la roue est entraînée de droite à gauche comme l'indique la flèche F. L'aspiration de l'eau par le conduit 16 entraîne les détritus et les organismes vivants qui se trouvent plaqués et entraînés sur les panneaux filtrants avec la coopération des petits déflecteurs 40, et sont décollés et projetés par l'eau sous faible pression lorsqu'ils passent à la hauteur du dispositif conforme à l'invention. Les organismes sont alors entraînés en douceur dans la goulotte 50 et peuvent être évacués par le conduit 28 pour être restitués au fleuve 12. Les jets de faible pression ne suffisent pas à décoller tous les détritus dont la taille est en général supérieure aux organismes, aussi un dispositif similaire doté toutefois d'une rampe d'eau à haute pression de l'ordre de 4 a 8 bars est prévue symétriquement de l'autre côté de la roue toujours dans la zone émergée et les détritus qui sont décollés cette fois grâce à l'action d'une rampe de lavage 52 sont envoyés dans une goulotte 54 pour être dirigés vers le fleuve par le conduit 30.

Grâce à l'utilisation du dispositif conforme à l'invention qui vient d'être décrit, on peut obtenir d'excellents résultats. C'est ainsi en effet que contrairement à un dispositif de haute pression de type courant qui permet de ne récupérer, vivants et cependant dans un état très perturbé, qu'environ 50 % des organismes entraînés autour du filtre, le présent dispositif permet d'obtenir une récupération d'organismes vivants viables de l'ordre de 90 à 95 %.

**Revendications**

1. Dispositif de filtration rotatif qui permet la récupération des organismes vivants des stations de pompage d'eau, le dispositif comprenant un filtre rotatif constitué de plusieurs panneaux filtrants (36) pour empêcher le passage d'organismes vivants ou de débris lors de l'entrée de l'eau de l'extérieur vers l'intérieur du filtre et étant supporté en rotation autour d'un axe horizontal, une partie du filtre étant émergée au-dessus de l'eau à filtrer, caractérisé en ce qu'il comprend :

— du côté intérieur des filtres, un ensemble de deux rampes à multiples jets de lavage à l'eau à une pression suffisante pour repousser les organismes vivants sans toutefois les blesser, dont les buses sont orientées vers les panneaux filtrants pour que les jets des deux rampes (42-44) se rencontrent de l'autre côté du filtre et coopèrent pour fermer une seule veine liquide ;

— sur la face externe des panneaux filtrants des déflecteurs (40) montés de place en place radialement ;

— du côté extérieur des filtres, une goulotte (50) en forme de gouttière de réception de l'eau de lavage et de récupération des organismes vivants dont l'ouverture est orientée vers lesdites rampes et la surface concave permet de recevoir tangentiellement l'eau de lavage, le bord de ladite ouverture étant arrondi ou constitué d'un rouleau dans sa partie basse (51).

2. Dispositif selon la revendication 1, caractérisé en ce que les panneaux filtrants (36) sont rectangulaires et équipés de déflecteurs (40) à l'endroit de leur jonction.

3. Dispositif selon la revendication 1, caractérisé en ce que les rampes à multiples jets sont équipées de buses d'ouverture d'un diamètre d'environ 8 mm et qu'il comprend une rampe inférieure (42) de décollage des organismes vivants dont les buses sont inclinées d'environ 30° par rapport à la verticale et une rampe supérieure (44) d'entraînement des organismes vivants dont les buses sont inclinées d'environ 70° par rapport à la verticale.

## Claims

1. Rotary filtering apparatus making it possible to recover living organisms from water pumping stations, the apparatus incorporating a rotary filter constituted by several filter panels (36) for preventing the passage of living organisms or rubbish during the passage of water from the outside to the inside of the filter and being supported in rotation about a horizontal axis, part of the filter being emerged above the water to be filtered, characterized in that it comprises :. on the inside of the filters, a group of two rows of multiple jets for washing with water at an adequate pressure for forcing back the living organisms without injuring them, whose nozzles are oriented towards the filter panels so that the jets of the two rows (42-44) meeting on the other side of the filter and cooperating to close a single liquid stream ; deflectors (40) mounted at radial intervals on the outer face of the filter panels ; on the outside of the filters, a channel (5) in form of a trough for receiving washing water and recovering living organisms, whereof the opening is oriented towards said rows and the concave surface makes it possible to tangentially receive the washing water, the edge of said opening being rounded or constituted by a roller in its bottom part (51).

2. Apparatus according to claim 1, characterized in that the filter panels (36) are rectangular and equipped with deflectors (40) at their junction.

3. Apparatus according to claim 1, characterized in that the rows of multiple water jets are equipped with nozzles having a diameter of approximately 8 mm, and comprises a lower row (42) for the release of the living organisms, whose nozzles are inclined by approximately 30° relative to the vertical and an upper row (44) for displacing the living organisms, whose nozzles are inclined by approximately 70° relative to the vertical.

## Patentansprüche

1. Drehfiltervorrichtung, die die Rückgewinnung von lebenden Organismen bei Wasserpumpanlagen erlaubt, wobei die Vorrichtung ein Drehfilter umfaßt, welches von mehreren Filtriertafeln (36) gebildet ist, um den Durchtritt von lebenden Organismen oder von Überresten beim Eintritt des Wassers von außen in das innere des Filters zu verhindern, und das zur Drehung um eine horizontale Achse gelagert ist, wobei ein Teil des Filters oberhalb des zu filtrierenden Wasser herauskommt, dadurch gekennzeichnet, daß sie umfaßt :

— auf der inneren seite der Filter eine Gesamtheit von zwei Rampen für Mehrfach Waschwasserstrahlen mit einem ausreichenden Druck, um die lebenden Organismen zurückzustoßen, ohne sie gleichwohl zu verletzen, wobei deren Düsen auf die Filtriertafeln gerichtet sind, damit sich die Strahlen der zwei Rampen (42-44) auf der anderen Seite des Filters treffen und zusammenwirken, um sich zu einem einzigen Flüssigkeitsstrahl zusammenzuschließen ;

— auf der Außenseite der Filtriertafeln Ablenkelemente (40), die aufeinanderfolgend radial angebracht sind, ;

— auf der äußeren Seite der Filter ein Rutsche (50) in der Form einer Dachrinne zur Aufnahme des Waschwassers und zur Wiedergewinnung der lebenden organismen, wobei deren öffnung zu den genannten Rampen gerichtet ist und die konkave Oberfläche erlaubt, das Waschwasser tangential zu empfangen, wobei der Rand der genannten Öffnung abgerundet oder von einer Rolle an seinem unteren Abschnitt (51) gebildet ist.

2. Vorrichtung nach Anspruch 1, dadurch gekennzeichnet, daß die Filtriertafeln (36) rechteckig und an ihrer Verbindungsstelle mit Ablenkelementen (40) ausgerüstet sind.

3. Vorrichtung nach Anspruch 1, dadurch gekennzeichnet, daß die Rampen mit Düsen mit einem öffnungsdurchmesser von ungefähr 8 mm ausgerüstet sind und daß die Vorrichtung zum Ablösen der lebenden Organismen eine untere Rampe (42), deren Düsen in bezug auf die Vertikale ungefähr 30° geneigt sind, und zum Mitführen der lebenden Organismen eine obere Rampe (44) aufweist, deren Dusen in bezug auf die Vertikale ungefähr 70° geneigt sind.

FIG.1

FIG.2

1

# FIG.3

FIG.4

FIG.5